# EUROPEAN PATENT APPLICATION

(11) **EP 3 451 033 A1**
(43) Date of publication of application: **06.03.2019**
(21) Application number: 17188573.4
(22) Date of filing: 30.08.2017
(51) Int. Cl.: G02B 6/32, G02B 6/38, G02B 6/24, G02B 6/26

(54) **OPTICAL DATA TRANSMISSION SYSTEM**

(71) Applicant: Reichle & De-Massari AG, 8620 Wetzikon (CH)
(72) Inventor: RUIZ BRUNNER, Blanca Esthela, 8032 Zürich (CH); GSELL, Christian Balazs, 6037 Root (CH); FERRER MOREU, Andrés, 8050 Zürich (CH)
(74) Representative: Daub, Thomas

(57) **Abstract**

The invention is based on an optical data transmission system (10a-c) comprising at least one first lens array (12a-c) which has at least one first lens (14a-c), and at least one second lens array (16a-c) which has at least one second lens (18a-c) which has, in at least one signal transmission state, a minimum distance (20a-c) from the first lens (14a-c) of maximally 2 mm along a beam direction (22a-c).

## Description

### Prior art

The invention relates to an optical data transmission system according to claim 1 and to a method for operating at least one optical data transmission system according to claim 14.

From the prior art an optical data transmission system is already known. The optical data transmission system comprises a first lens array, which has several first lenses being arranged in a matrix pattern. A second lens array, which has several second lenses being arranged in a matrix pattern, is located spaced apart from the first lens array. Thereby, each of the second lenses of the second lens array is located spaced apart from the corresponding first lens of the first lens array.

The objective of the invention is, in particular, to provide an optical data transmission system with improved characteristics regarding a signal transmission. The objective is achieved, according to the invention, by the features of claims 1 and 14, while advantageous implementations and further developments of the invention may be gathered from the dependent claims.

### Advantages of the invention

An optical data transmission system is proposed comprising at least one first lens array which has at least one first lens, and at least one second lens array which has at least one second lens which has, in at least one signal transmission state, a minimum distance from the first lens of maximally 2 mm along a beam direction, in particular of maximally 1.5 mm, advantageously of maximally 1 mm, particularly advantageously of maximally 0.5 mm, preferably of maximally 0.1 mm and particularly preferably of maximally 0.05 mm; in the signal transmission state the second lens array is in particular configured for receiving at least one optical signal from the first lens array.

By means of the invention in particular an optimized signal transmission, in particular an optimized optical signal transmission, can be achieved. In particular a low error rate in the transmission of data can be achieved, in particular due to the short distance between the first lens and the second lens. There is in particular little space for elements disturbing the data transmission.

An "optical data transmission system" is in particular to be understood as a system configured for transmission of data in an optical fashion, that is in particular via electromagnetic radiation and preferably via electromagnetic radiation having a wavelength of at least 800 nm, in particular at least 820 nm and preferably at least 830 nm and maximally 1,600 nm, in particular maximally 1,200 nm and preferably maximally 1,000 nm. Preferably, an optical signal is transmitted via electromagnetic radiation having a wavelength of at least substantially 850 nm.

A "lens array" is in particular to be understood as a unity comprising at least two, in particular at least four, preferably at least eight, most preferably at least twelve and advantageously several lenses, which are in particular arranged in a regular fashion and preferably in a matrix-pattern, advantageously in a regular square lattice. The lenses of the lens array may in particular be located close to each other, in particular on a printed circuit board, and in particular made independent of each other. Preferably, the lenses of the lens array are made in one piece. The lens array is in particular embodied as a micro lens array.

A "lens" is in particular to be understood as an element, in particular as a refractive optical element, which focuses or disperses a light beam via refraction. In the signal transmission state, the first lens in particular collimates the light of the light beam. The lens, in particular the first lens and/or the second lens, is circular-shaped, when viewed along beam direction. The lens array and/or the lens has a surface profile, which is plano-convex and/or aspherical.

A "signal transmission state" is in particular to be understood as a state, in which data are transmitted in an optical fashion, preferably from the first lens of the first lens array to the second lens of the second lens array.

The beam direction is in particular directed parallel to the beam by means of which the data are transferred. In particular, the beam direction is directed from the first lens to the second lens. The first lens in particular has a first symmetry axis. The second lens in particular has a second symmetry axis, which is in particular parallel to the first symmetry axis of the first lens. The beam direction is in particular directed parallel to the first symmetry axis of the first lens and/or to the second symmetry axis of the second lens.

The optical data transmission system in particular comprises at least one first waveguide, which is connected in particular to the first lens array, in particular to the first lens of the first lens array, and which in particular comprises at least one second waveguide, which in particular is connected to the second lens array, in particular to the second lens of the second lens array.

The first lens array, in particular the first lens of the first lens array, is arranged along beam direction at an end of the first waveguide. The second lens array, in particular the second lens of the second lens array, is arranged along beam direction at an end of the second waveguide. The light of the light beam in particular leaves and/or enters the waveguide at the end, which the lens array is located at.

The optical data transmission system in particular comprises at least one first ferrule, which in particular fixes the first waveguide in at least one position, in at least one signal transmission state. In particular, the first ferrule fixes the first waveguide at least at an end of the first waveguide which is located adjacent to the first lens array in at least one signal transmission state. The first lens array and in particular the first lens can be oriented relative to the first ferrule in at least one signal transmission state.

The optical data transmission system may in particular comprise at least one second ferrule, which may in particular fix the second waveguide in at least one position, in at least one signal transmission state. In particular, the second ferrule may fix the second waveguide at least at an end of the second waveguide which may in particular be located adjacent to the second lens array in at least one signal transmission state. The second lens array and in particular the second lens can be oriented relative to the second ferrule in at least one signal transmission state. Alternatively or additionally, the optical transmission system may in particular comprise at least one detector and/or at least one vertical-external-cavity surface-emitting-laser (VECSEL) at which the second lens array may in particular be located and/or to which the second lens array may in particular be fixed.

In this context, "configured" is in particular to mean specifically programmed, designed and/or equipped. By an object being configured for a certain function is in particular to be understood that the object implements and/or fulfills said certain function in at least one application state and/or operating state.

Furthermore, it is proposed that the first lens array has a first lens array thickness along the beam direction of maximally 1 mm, in particular of maximally 0.95 mm, advantageously of maximally 0.9 mm, particularly advantageously of maximally 0.85 mm, preferably of maximally 0.8 mm and particularly preferably of maximally 0.75 mm. In particular, the first lens array has a first lens array thickness along the beam direction of at least 0.62 mm, in particular of at least 0.63 mm, advantageously of at least 0.64 mm, particularly advantageously of at least 0.65 mm, preferably of at least 0.67 mm and particularly preferably of least 0.68 mm. Preferably, the first lens array has a first lens array thickness along beam direction of at least substantially 0.695 mm.

In particular, the second lens array has a second lens array thickness along the beam direction of maximally 1 mm, in particular of maximally 0.95 mm, advantageously of maximally 0.9 mm, particularly advantageously of maximally 0.85 mm, preferably of maximally 0.8 mm and particularly preferably of maximally 0.75 mm. In particular, the second lens array has a second lens array thickness along the beam direction of at least 0.62 mm, in particular of at least 0.63 mm, advantageously of at least 0.64 mm, particularly advantageously of at least 0.65 mm, preferably of at least 0.67 mm and particularly preferably of least 0.68 mm. Preferably, the second lens array has a second lens array thickness along beam direction of at least substantially 0.695 mm. A "lens array thickness" is in particular to be understood as an extension of the lens array being directed parallel to the beam direction. The lens array thickness in particular extends from a first end of the lens array in a direction parallel to the beam direction to a second end of the lens array, which is located opposite to the first end of the lens array. As a result of this, in particular a compact embodiment can be provided.

Additionally, it is proposed that the first lens has a first lens diameter, when viewed along the beam direction, of at least 0.2 mm, in particular of at least 0.21 mm, advantageously of at least 0.22 mm, particularly advantageously of at least 0.23 mm and preferably of at least 0.24 mm. The first lens in particular has a first lens diameter, when viewed along the beam direction, of maximally 0.25 mm, in particular of maximally 0.249 mm, advantageously of maximally 0.248 mm, particularly advantageously of maximally 0.247 mm and preferably of maximally 0.246 mm. In particular, the second lens has a second lens diameter, when viewed along the beam direction, of at least 0.2 mm, in particular of at least 0.21 mm, advantageously of at least 0.22 mm, particularly advantageously of at least 0.23 mm and preferably of at least 0.24 mm. The second lens in particular has a second lens diameter, when viewed along the beam direction, of maximally 0.25 mm, in particular of maximally 0.249 mm, advantageously of maximally 0.248 mm, particularly advantageously of maximally 0.247 mm and preferably of maximally 0.246 mm. A "lens diameter" of a lens is in particular to be understood, when viewed along the beam direction, as a diameter of a smallest possible circle just still enclosing the lens. On account of this, in particular a beam can be extended maximally and therefore in particular an impact of dust and/or any other kind of dirt can be minimized. As a result of this, in particular a high amount of data can be transmitted.

It is also proposed that the first lens has in a cross-sectional view a first design curvature radius of at least 0.19 mm, in particular of at least 0.195 mm, advantageously of at least 0.2 mm, particularly advantageously of at least 0.205 mm and preferably of at least 0.210 mm. The first lens in particular has in a cross-sectional view a first design curvature radius of maximally 0.240 mm, in particular of maximally 0.235 mm, advantageously of maximally 0.23 mm, particularly advantageously of maximally 0.225 mm and preferably of maximally 0.22 mm. Preferably, the first lens has in a cross-sectional view a first design curvature radius of at least substantially 0.216 mm. In particular, the second lens has in a cross-sectional view a second design curvature radius of at least 0.190 mm, in particular of at least 0.195 mm, advantageously of at least 0.2 mm, particularly advantageously of at least 0.205 mm and preferably of at least 0.210 mm. The second lens in particular has in a cross-sectional view a second design curvature radius of maximally 0.240 mm, in particular of maximally 0.235 mm, advantageously of maximally 0.230 mm, particularly advantageously of maximally 0.225 mm and preferably of maximally 0.22 mm. Preferably, the second lens has in a cross-sectional view a second design curvature radius of at least substantially 0.216 mm. A "design curvature radius" of a lens is in particular to be understood as a radius of a maximum circle, which can be located inside the lens. On account of this, a collimation of light can be optimized in particular for a minimum crosstalk.

Furthermore, it is proposed that the first lens has a first lens thickness along the beam direction of maximally 0.24 mm, in particular of maximally 0.235 mm, advantageously of maximally 0.23 mm, particularly advantageously of maximally 0.225 mm and preferably of maximally 0.22 mm. In particular, the first lens has a first lens thickness along the beam direction, which is maximally as long as the first design curvature radius. The first lens in particular has a first lens thickness along the beam direction of at least 0.005 mm, in particular of at least 0.01 mm, advantageously of at least 0.05 mm, particularly advantageously of at least 0.1 mm and preferably of at least 0.15 mm. In particular, the second lens has a second lens thickness along the beam direction of maximally 0.240 mm, in particular of maximally 0.235 mm, advantageously of maximally 0.230 mm, particularly advantageously of maximally 0.225 mm and preferably of maximally 0.220 mm. In particular, the second lens has a second lens thickness along the beam direction, which is maximally as long as the second design curvature radius. The second lens in particular has a second lens thickness along the beam direction of at least 0.005 mm, in particular of at least 0.01 mm, advantageously of at least 0.05 mm, particularly advantageously of at least 0.1 mm and preferably of at least 0.15 mm. A "lens thickness" of a lens is in particular to be understood as an extension by which the lens extends beyond a lens basic body of the lens body. The lens array in particular comprises at least one lens basic body having an amount of mass and/or volume of at least 70 %, in particular of at least 80 % and preferably of at least 90 % of the lens array. As a result of this, in particular a maximum beam enlargement can be achieved.

In addition, it is proposed that the first lens has in a cross-sectional view a first design conic constant of maximally - 0.3, in particular of maximally - 0.4, advantageously of maximally - 0.5, particularly advantageously of maximally - 0.6 and preferably of maximally - 0.7. In particular the first lens has in a cross-sectional view a first design conic constant of at least - 1.2, in particular of at least - 1.1, advantageously of at least - 1, particularly advantageously of at least - 0.95 and preferably of at least - 0.9.. The second lens has in particular in a cross-sectional view a second design conic constant of at least - 1.2, in particular of at least - 1.1, advantageously of at least - 1, particularly advantageously of at least - 0.95 and particularly preferably of at least - 0.9. In particular, the second lens has a second design conic constant of maximally - 0.3, in particular of maximally - 0.4, advantageously of maximally - 0.5, particularly advantageously of maximally - 0.6 and preferably of maximally - 0.7. A "conic constant" of a lens is in particular to be understood as a parameter describing conic sections of the lens. For example a conic constant of zero describes a circular embodiment of the lens. On account of this, a collimation of the light can be optimized.

Furthermore, it is proposed that the first lens has a first lens clear qualified aperture diameter, when viewed along the beam direction, of at least 0.1 mm, in particular of at least 0.12 mm, advantageously of at least 0.14 mm, particularly advantageously of at least 0.16 mm and preferably of at least 0.18 mm. The first lens in particular has a first lens clear qualified aperture diameter, when viewed along the beam direction, of maximally 0.25 mm, in particular of maximally 0.249 mm, advantageously of maximally 0.248 mm, particularly advantageously of maximally 0.247 mm and preferably of maximally 0.246 mm. In particular, the first lens has a first lens clear qualified aperture diameter, when viewed along the beam direction, of maximally the first lens diameter, when viewed along the beam direction. The second lens has a second lens clear qualified aperture diameter, when viewed along the beam direction, of at least 0.1 mm, in particular of at least 0.12 mm, advantageously of at least 0.14 mm, particularly advantageously of at least 0.16 mm and preferably of at least 0.18 mm. The second lens in particular has a second lens clear qualified aperture diameter, when viewed along the beam direction, of maximally 0.25 mm, in particular of maximally 0.249 mm, advantageously of maximally 0.248 mm, particularly advantageously of maximally 0.247 mm and preferably of maximally 0.246 mm. In particular, the second lens has a second lens clear qualified aperture diameter, when viewed along the beam direction, of maximally the second lens diameter, when viewed along the beam direction. A "lens clear qualified aperture diameter" of a lens is in particular to be understood as an extension which is, when viewed along the beam direction, located around the midpoint of the lens, the lens having an ideal geometry over the extension, that is in particular to say that the lens has in a cross-sectional view a circular shape, in particular over the extension. As a result of this, data transmission can in particular be improved.

It is also proposed that the first lens is made at least to a large part of at least one material which has a transmission value of over 80 % in the wavelength range from 800 nm to 1,700 nm. For example, the first lens may in particular be made at least to a large part of fused silica, in particular of high purity UV-grade fused silica, and/or of borosilicate glass and/or of silicon and/or of at least one polymer. The first lens array may in particular be made at least to a large part of fused silica, in particular of high purity UV-grade fused silica, and/or of borosilicate glass and/or of silicon and/or of at least one polymer. In particular, the second lens is made at least to a large part of at least one material which has a transmission value of over 80 % in the wavelength range from 800 nm to 1,700 nm. For example, the second lens may in particular be made at least to a large part of fused silica, in particular of high purity UV-grade fused silica, and/or of borosilicate glass and/or of silicon and/or of at least one polymer. The second lens array may in particular be made at least to a large part of fused silica, in particular of high purity UV-grade fused silica, and/or of borosilicate glass and/or of silicon and/or of at least one polymer. The term "at least to a large part" is in particular to be understood as an amount, in particular as an amount of mass und/or of volume, of at least 70 %, in particular of at least 80 %, advantageously of at least 90 % and particularly advantageously of at least 95 %. On account of this, an optimized data rate may in particular be achieved.

In addition, it is proposed that the first lens has a first anti-reflecting coating, located at the curved side of the first lens. In particular, the first anti-reflecting coating has a reflectance of maximally 0.5 %, in particular of maximally 0.3 %, advantageously of maximally 0.2 %, particularly advantageously of maximally 0.1 % and preferably of maximally 0.05 %. The second lens has a second anti-reflecting coating, located at the curved side of the second lens. In particular, the second anti-reflecting coating has a reflectance of maximally 0.5 %, in particular of maximally 0.3 %, advantageously of maximally 0.2 %, particularly advantageously of maximally 0.1 % and preferably of maximally 0.05 %. As a result of this, a reduced loss of electromagnetic radiation may in particular be achieved and therefore in particular an optimized data transmission may in particular be provided.

Furthermore, it is proposed that the first lens has a first surface roughness of maximally 5 nm, in particular of maximally 4 nm, advantageously of maximally 3 nm, particularly advantageously of maximally 2 nm and preferably of maximally 1 nm.

In particular, the second lens has a second surface roughness of maximally 5 nm, in particular of maximally 4 nm, advantageously of maximally 3 nm, particularly advantageously of maximally 2 nm and preferably of maximally 1 nm. The first surface roughness and/or the second surface roughness is in particular given in root means square. A "surface roughness" is in particular to be understood as a component of surface texture. In particular, the surface roughness is quantified by the deviations in the direction of the normal vector of an actual surface from its ideal form. If these deviations are large, the surface is rough. If these deviations are small, the surface is smooth. On account of this, a high quality may in particular be achieved, thereby in particular improving the data transmission.

It is also proposed that the first lens has a first surface profile deviation of maximally 25 nm, in particular of maximally 20 nm, advantageously of maximally 15 nm, particularly advantageously of maximally 10 nm and preferably of maximally 5 nm. In particular, the second lens has a second surface profile deviation of maximally 25 nm, in particular of maximally 20 nm, advantageously of maximally 15 nm, particularly advantageously of maximally 10 nm and preferably of maximally 5 nm. The first surface profile deviation and/or the second surface profile deviation is in particular given in root means square. A "surface profile deviation" of a lens is in particular to be understood as a deviation of the actual form of the lens from an ideal form of the lens, which is for example caused by the manufacturing process. The first surface profile deviation and/or the second surface profile deviation may for example be a deviation in form of waves and/or or in form of grooves and/or in form of cones and/or spills and/or pulleys. In particular, the first surface profile deviation and/or the second surface profile deviation is a deviation regarding straightness and/or evenness and/or roundness. As a result of this, a quality of the lens may in particular be checked in an easy way such that in particular in case of poor quality improvements may be created.

In addition, it is proposed that the first lens array comprises at least one further first lens, which is arranged at a midpoint distance from the first lens of at least substantially 0.25 mm. In particular, the second lens array comprises at least one further first lens, which is arranged at a midpoint distance from the first lens of at least substantially 0.25 mm. The term "at least substantially" is in particular to be understood as a deviation from a value of maximally 15 %, in particular of maximally 10 %, advantageously of maximally 5 %, particularly advantageously of maximally 3 % and preferably of maximally 1 %. On account of this, a compact embodiment can in particular be provided.

An improved signal transmission may in particular be provided via the first lens array of the data transmission system and/or via the second lens array of the data transmission system.

In particular, the first lens array may be part of a first light source, in particular of a vertical-cavity surface-emitting laser, and/or of a first optical device, for example a first optical detector. Alternatively and/or additionally, the second lens array may be part of a second light source, in particular of a vertical-cavity surface-emitting laser, and/or of a second optical device, for example a second optical detector. Advantageously, the first lens array is part of a first optical connector and/or the second lens array is part of a second optical connector. Preferably, a first optical connector comprising at least one lens array of the data transmission system and/or a second optical connector comprising at least one first lens array of the data transmission system is proposed. As a result of this, a high quality signal transmission can be achieved.

An optimized signal transmission may in particular be provided via a method for operating at least one optical data transmission system, in which an optical data signal is transmitted through air over a minimum distance of maximally 2 mm, in particular of maximally 1.5 mm, advantageously of maximally 1 mm, particularly advantageously of maximally 0.5 mm, preferably of maximally 0.1 mm and particularly preferably of maximally 0.05 mm along a beam direction.

Herein the optical data transmission system is not to be limited to the application and implementation described above. In particular, for the purpose of fulfilling a functionality herein described, the optical data transmission system may comprise a number of respective elements, structural components and units that differs from the number mentioned herein. Furthermore, regarding the value ranges mentioned in this disclosure, values within the limits mentioned are to be understood to be also disclosed and to be used as applicable.

### Drawings

Further advantages may become apparent from the following description of the drawings. In the drawings exemplary embodiments of the invention are shown. The drawings, the description and the claims contain a plurality of features in combination. The person having ordinary skill in the art will purposefully also consider the features separately and will find further expedient combinations.

If there is more than one specimen of a certain object, only one of these is given a reference numeral in the figures and in the description. The description of this specimen may be correspondingly transferred to the other specimens of the object.

It is shown in:
- Fig. 1: a first lens array and a second lens array of an optical data transmission system in a demounted state in a schematic plan view,
- Fig. 2: the first lens array of figure 1 in a schematic cross-sectional view along line II-II of figure 1,
- Fig. 3: a portion of the first lens array and of the second lens array of figure 1 in a signal transmission state in a schematic cross-sectional view,
- Fig. 4: a first lens of the first lens array of figure 1 in an extended schematic cross-sectional view without showing an anti-reflecting coating,
- Fig. 5: the first lens of the first lens array of figure 4 in an extended schematic cross-sectional view showing an anti-reflecting coat-ing,
- Fig. 6: a first optical connector and a second optical connector of the optical data transmission system of figure 1 in a signal trans-mission state in a schematic lateral view,
- Fig. 7: a first optical light source and a second optical connector of an alternative optical data transmission system in a signal trans-mission state in a schematic lateral view and
- Fig. 8: a first optical connector and a second optical device of an alter-native optical data transmission system in a signal transmission state in a schematic lateral view.

### Description of the embodiments

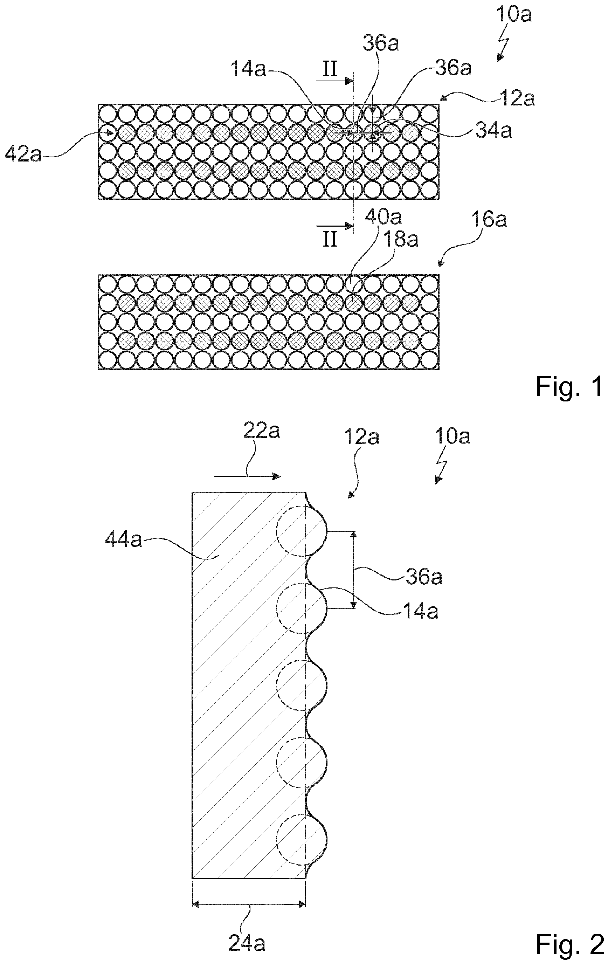

Figure 1 shows a part of an optical data transmission system 10a in a demounted state. The optical data transmission system 10a comprises a first lens array 12a and a second lens array 16a. The first lens array 12a is specifically configured for the optical data transmission system 10a. The second lens array 16a is specifically configured for the optical data transmission system 10a.

In the present embodiment, the first lens array 12a comprises a first lens 14a and eighty-nine further first lenses 34a. The first lens array 12a comprises in total ninety first lenses 14a, 34a in the present embodiment. Thirty-two first lenses 14a, 34a are called first "active" lenses 14a, 34a and are configured for data transmission. The first "active" lenses 14, 34a are marked by a hatching in figure 1.

The first "active" lenses 14a, 34a are arranged in two rows 42a, each of which having sixteen "active" lenses 14a, 34a. Each row 42a is surrounded by so-called first "passive" lenses 14a, 34a. The first "passive" lenses 14a, 34a have merely a stabilization function in particular in a manufacturing process of the first lens array 12a. The presence of first "passive" lenses 14a, 34a renders the manufacturing of the first lens array 12a cheaper compared to an embodiment without the first "passive" lenses 14a, 34a.

In an alternative embodiment, the first lens array 12a may in particular comprise a lower amount of first "active" lenses 14a, 34a, for example in total eight and/or twelve and/or sixteen and/or twenty-four first "active" lenses 14a, 34a. The first lens array 12a may in particular comprise a higher amount of first "active" lenses 14a, 34a, for example in total sixty-four and/or one hundred twenty-eight and/or two hundred fifty-two first "active" lenses 14a, 34a. In the following only one of the further first lenses 34a will be described.

The further first lens 34a, which is in particular located closest to the first lens 14a, is arranged at a midpoint distance 36a from the first lens 14a of at least substantially 0.25 mm (compare figures 1 and 2).

The second lens array 16a comprises a second lens 18a and eighty-nine further second lenses 40a. In the following only one of the further second lenses 40a will be described.

As the first lens array 12a and the second lens array 16a are embodied identically, in the following only the first lens array 12a and in particular only the first lens 14a is described. A description of the second lens array 16a and in particular of the second lens 18a is analogous to the description of the first lens array 12a and in particular of the first lens 14a.

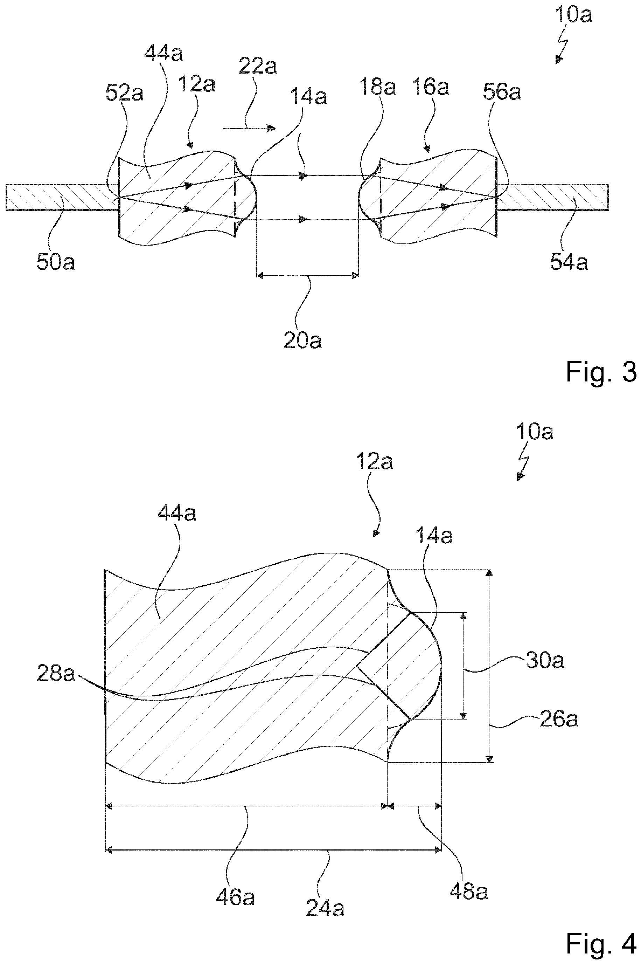

In a signal transmission state the first lens array 12a and the second lens array 16a face each other in beam direction 22a (compare figure 3). An optical signal is transmitted from the first lens array 12a to the second lens array 16a in a signal transmission state. The first lens array 12a and the second lens array 16a have a minimum distance 20a of substantially 0.5 mm along a beam direction 22a in a signal transmission state. The second lens 18a has, in a signal transmission state, a minimum distance 20a of substantially 0.05 mm from the first lens 14a along a beam direction 22a.

In a method for operating the optical data transmission system 10a an optical signal is transmitted from the first lens array 12a to the second lens array 16a. In the method for operating the optical data transmission system 10a an optical data signal is transmitted through air over a minimum distance 20a of substantially 0.05 mm along a beam direction 22a.

The first lens array 14a comprises a first lens basic body 44a. The first lens 14a partly protrudes over a surface of the first lens basic body 44a. In the present embodiment, the first lens array 12a has a first lens array thickness 24a of substantially 0.695 mm along the beam direction 22a. The first lens array thickness 24a is a sum of a first basic body thickness 46a along the beam direction 22a and a first lens thickness 48a along the beam direction 22a. The value of the first basic body thickness 46a along the beam direction 22a and/or the value of the first lens thickness 48a along the beam direction 22a depend/depends on the particular embodiment and will therefore not be described in detail.

The first lens 14a and the first lens basic body 44a are made in one piece. The first lens array 12a is made in one piece. The first lens array 12a is made to a large part of materials which have a transmission value of over 80 % in the wavelength range from 800 nm to 1,700 nm. The first lens array 12a is made to a large part of fused silica. The first lens 14a is made to a large part of materials which have a transmission value of over 80 % in the wavelength range from 800 nm to 1,700 nm. The first lens 14a is made to a large part of fused silica.

When viewed along beam direction 22a, the first lens 12a is substantially circle-shaped. The first lens has a first lens diameter 26a of substantially 0.24 mm, when viewed along the beam direction 22a. When viewed along beam direction 22a, the first lens 12a has a first lens clear qualified aperture diameter 30a of substantially 0.19 mm.

In a cross-sectional view, the first lens 14a has a first design curvature radius 28a of substantially 0.216 mm. The first lens 14a is, in a cross-sectional view, oval-shaped. In a cross-sectional view, the first lens 14a deviates from a perfectly circular shape, which is in particular shown in dashed lines in figures 2 to 5. In the present embodiment, the first lens 14a has in a cross-sectional view a first design conic constant of substantially -0.98.

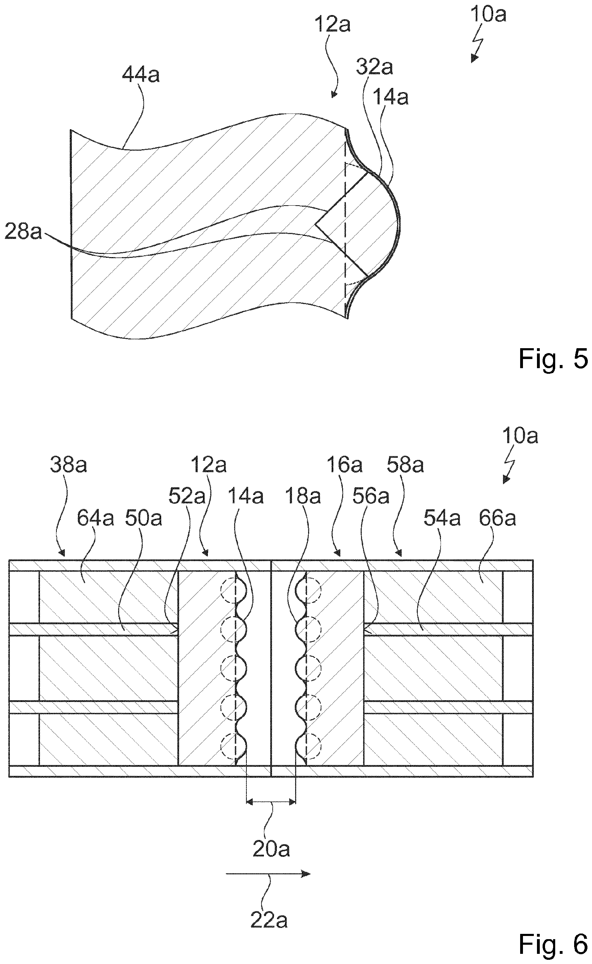

The first lens array 12a comprises a first lens anti-reflecting coating 32a (compare figure 5). The first anti-reflective coating 32a is located at the curved side of the first lens array 12a. The first lens 14a has a first anti-reflecting coating 32a, located at the curved side of the first lens 14a.

The first lens 14a and in particular the first lens array 12a is/are of high quality. The first lens 14a and in particular the first lens array 12a has/have in the present embodiment a first surface roughness of substantially 1 nm. The first lens 14a and in particular the first lens array 12a has/have in the present embodiment a first surface profile deviation of substantially 5 nm.

On a side of the first lens 14a, which is in beam direction 22a located opposite to the curved side of the first lens 14a, the first lens 14a is connected to a first waveguide 50a of the optical data transmission system 10a (compare figures 3 and 6). The optical data transmission system 10a comprises several first waveguides 50a, in particular one first waveguide 50a for each first "active" lens 14a, 34a. In the following only one of the first waveguides 50a will be described.

The optical data transmission system 10a comprises one first ferrule 64a (compare figure 6). The first ferrule 64a fixes the first waveguide 50a in position, in a signal transmission state. The first lens array 12a and in particular the first lens 14a, 34a can be oriented relative to the first ferrule 64a in a signal transmission state, for example via a method for orientation as known from the state of the art.

In a mounted state, the first ferrule 64a and the first lens array 12a are connected to each other via a first connection element 52a of the optical data transmission system 10a. The first connection element 52a is in the present embodiment glue. The first connection element 52a has the function of serving as an index-matching material between the first lens 14a and the first waveguide 50a.

In the present embodiment, the optical data transmission system 10a comprises a first optical connector 38a (compare figure 6). The first optical connector 38a comprises the first lens array 12a. The first optical connector 38a comprises the first ferrule 64a. The first optical connector 38a comprises the first waveguide 50a.

The optical data transmission system 10a comprises several second waveguides 54a, in particular one second waveguide 54a for each second "active" lens 18a. In the following only one of the second waveguides 54a will be described.

The optical data transmission system 10a comprises one second ferrule 66a (compare figure 6). The second ferrule 66a fixes the second waveguide 54a in position, in a signal transmission state. The second lens array 16a and in particular the second lens 18a can be oriented relative to the second ferrule 66a in a signal transmission state, for example via a method for orientation as known from the state of the art.

In a mounted state, the second ferrule 66a and the second lens array 16a are connected to each other via a second connection element 56a of the optical data transmission system 10a. The second connection element 56a is in the present embodiment glue. The second connection element 56a has the function of serving as an index-matching material between the second lens 18a and the second waveguide 54a.

In the present embodiment, the optical data transmission system 10a comprises a second optical connector 58a (compare figure 6). The second optical connector 58a comprises the second lens array 16a. The second optical connector 58a comprises the second ferrule 66a. The second optical connector 58a comprises the second waveguide 54a.

In a signal transmission state, the first optical connector 38a and the second optical connector 58a are connected to each other. The first optical connector 38a and the second optical connector 58a define the minimum distance 20a along a beam direction 22a between the first lens 14a and the second lens 18a.

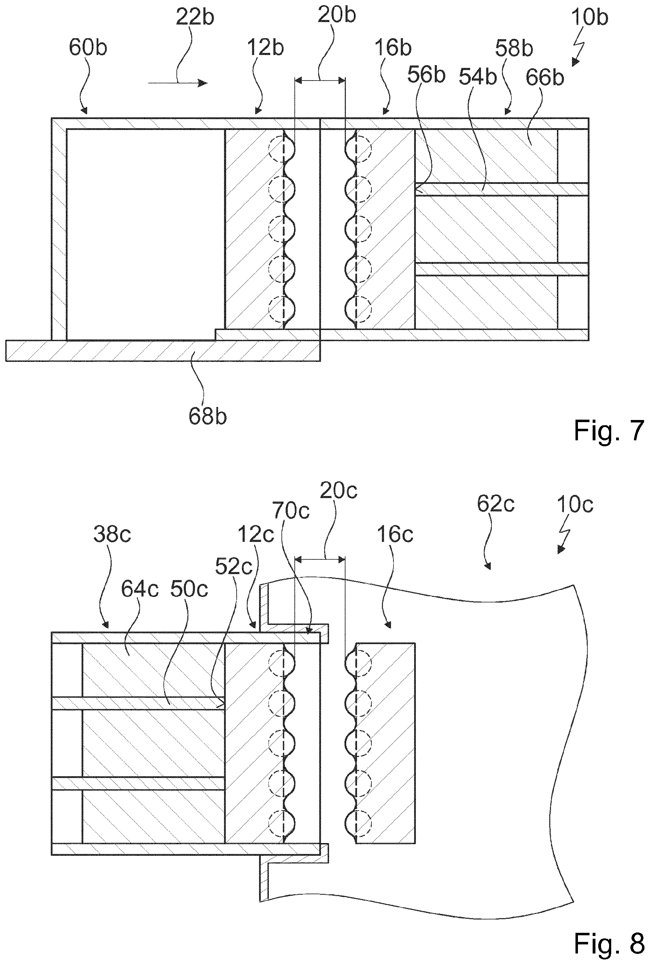

Figures 7 and 8 show further exemplary embodiments of the invention. The following description is substantially limited to the differences between the exemplary embodiments, wherein regarding structural elements, features and functions that remain the same, the description of the other exemplary embodiments, in particular the exemplary embodiment of figures 1 to 6, may be referred to. For distinguishing the exemplary embodiments, the letter a of the reference numerals in the exemplary embodiment of figures 1 to 6 has been substituted by the letters b and c in the reference numerals of the exemplary embodiments of figures 7 and 8. Regarding structural elements having the same denomination, in particular regarding structural elements having the same reference numerals, principally the drawing and/or the description of the other exemplary embodiments, in particular of the exemplary embodiment of figures 1 to 6, may be referred to.

Figure 7 shows an alternative optical data transmission system 10b comprising a first optical light source 60b and a second optical connector 58b. The first optical light source 60b comprises a first lens array 12b, in particular as described in the embodiment of figures 1 to 6. The second optical connector 58b comprises a second lens array 16b, in particular as described in the embodiment of figures 1 to 6.

The first optical light source 60b comprises a first printed circuit board 68b. The first printed circuit board 68b may in particular be electrical and/or optical. The first optical light source 60b may in particular comprise at least one first waveguide (not shown) which in particular may be coupled to the first printed circuit board 68b and to the first lens array 12b and which may transfer an optical signal between the first printed circuit board 68b and the first lens array 12b in a signal transmission state. Alternatively or additionally, the first optical light source 60b may in particular comprise at least one transceiver (not shown) which may be coupled to the first printed circuit board 68b and to the first lens array 12b. Alternatively or additionally, the first optical light source 60b may in particular comprise at least one converter (not shown) which in particular may be coupled to the first printed circuit board 68b and to the first lens array 12b and which in particular may convert an optical signal into an electrical signal and/or which may in particular convert an electrical signal into an optical signal.

A second lens 18b of the second lens array 16b has, in a signal transmission state, a minimum distance 20b of substantially 0.05 mm along a beam direction 22b from a first lens 14b of the first lens array 12b. The minimum distance 20b along a beam direction 22b between the first lens array 12b and the second lens array 16a is defined by means of the first optical light source 60b and the second optical connector 58b. In a method for operating the optical data transmission system 10b an optical data signal is transmitted through air over a minimum distance 20b of substantially 0.05 mm along a beam direction 22b.

Figure 8 shows an alternative optical data transmission system 10c comprising a first optical connector 38c and a second optical device 62c. The first optical connector 38c comprises a first lens array 12c, in particular as described in the embodiment of figures 1 to 6. The second optical device 62c comprises a second lens array 16c, in particular as described in the embodiment of figures 1 to 6.

The second optical device 62c may in particular be a transceiver and/or a detector and/or an edge connector and/or an edge card plug and/or an edge card connector. Alternatively or additionally, the second optical device 62c may in particular comprise at least one second waveguide (not shown) which in particular may transfer an optical signal in a signal transmission state. Alternatively or additionally, the second optical device 62c may in particular comprise at least one converter (not shown) which in particular may convert an optical signal into an electrical signal and/or which may in particular convert an electrical signal into an optical signal. In a signal transmission state the first optical connector 38c is inserted into a second connection element 70a of the second optical device 62c. The second connection element 70a is embodied as a plug, in particular as a socket.

A second lens 18c of the second lens array 16c has, in a signal transmission state, a minimum distance 20c of substantially 0.05 mm from a first lens 14c of the first lens array 12c along a beam direction 22c. The minimum distance 20c along a beam direction 22c between the first lens array 12c and the second lens array 16c is defined by means of the first optical connector 38c and the second optical device 62c. In a method for operating the optical data transmission system 10c an optical data signal is transmitted through air over a minimum distance 20c of substantially 0.05 mm along a beam direction 22c.

### Reference Numerals

- 10: Optical data transmission system
- 12: First lens array
- 14: First lens
- 16: Second lens array
- 18: Second lens
- 20: Minimum distance
- 22: Beam direction
- 24: First lens array thickness
- 26: First lens diameter
- 28: First design curvature radius
- 30: First lens clear qualified aperture diameter
- 32: First anti-reflecting coating
- 34: Further first lens
- 36: Midpoint distance
- 38: First optical connector
- 40: Further second lens
- 42: Row
- 44: First lens basic body
- 46: First basic body thickness
- 48: First lens thickness
- 50: First waveguide
- 52: First connection element
- 54: Second waveguide
- 56: Second connection element
- 58: Second optical connector
- 60: First optical light source
- 62: Second optical device
- 64: First ferrule
- 66: Second ferrule
- 68: First printed circuit board
- 70: Second connection element

## Claims

1. Optical data transmission system comprising at least one first lens array (12a-c) which has at least one first lens (14a-c), and at least one second lens array (16a-c) which has at least one second lens (18a-c) which has, in at least one signal transmission state, a minimum distance (20a-c) from the first lens (14a-c) of maximally 2 mm along a beam direction (22a-c).

2. Optical data transmission system according to claim 1, the first lens array (12a-c) having a first lens array thickness (24a-c) along the beam direction (22a-c) of maximally 1 mm.

3. Optical data transmission system according to any one of the preceding claims, the first lens (14a-c) having a first lens diameter (26a-c) of at least 0.2 mm, when viewed along the beam direction (22a-c).

4. Optical data transmission system according to any one of the preceding claims, the first lens (14a-c) having in a cross-sectional view a first design curvature radius (28a-c) of at least 0.19 mm.

5. Optical data transmission system according to any one of the preceding claims, the first lens (14a-c) having in a cross-sectional view a first design conic constant of maximally - 0.3

6. Optical data transmission system according to any one of the preceding claims, the first lens (14a-c) having a first lens clear qualified aperture diameter (30a-c) of at least 0.1 mm, when viewed along the beam direction (22a-c).

7. Optical data transmission system according to any one of the preceding claims, the first lens (14a-c) being made at least to a large part of at least one material which has a transmission value of over 80 % in the wavelength range from 800 nm to 1700 nm.

8. Optical data transmission system according to any one of the preceding claims, the first lens (14a-c) having a first anti-reflecting coating (32a-c), located at the curved side of the first lens (14a-c).

9. Optical data transmission system according to any one of the preceding claims, the first lens (14a-c) having a first surface roughness of maximally 5 nm.

10. Optical data transmission system according to any one of the preceding claims, the first lens (14a-c) having a first surface profile deviation of maximally 25 nm.

11. Optical data transmission system according to any one of the preceding claims, the first lens array (12a-c) comprising at least one further first lens (34a-c), which is arranged at a midpoint distance (36a-c) from the first lens (14a-c) of at least substantially 0.25 mm.

12. First lens array of an optical data transmission system (10a-c) according to any one of the preceding claims.

13. First optical connector comprising at least one first lens array (12a-c) according to claim 12.

14. Method for operating at least one optical data transmission system (10a-c), in particular according to any one of claims 1 to 11, in which an optical data signal is transmitted through air over a minimum distance (20a-c) of maximally 2 mm along a beam direction (22a-c).
